# EUROPEAN PATENT APPLICATION

(11) **EP 4 840 689 A1**
(43) Date of publication of application: **18.11.2026**
(21) Application number: 25176179.7
(22) Date of filing: 13.05.2025
(51) Int. Cl.: B60N 2/00, B60N 2/02, B60N 2/22, B60N 2/427, B60N 2/888

(54) **ARTICULATED VEHICLE SEAT SYSTEM AND METHOD FOR CONTROLLING THE SEAT SYSTEM**

(71) Applicant: VOLVO CAR CORPORATION, 405 31 Göteborg (SE)
(72) Inventor: BOHMAN, Katarina, 443 32 LERUM (SE); HEURLIN, Fredrik, 423 56 TORSLANDA (SE); SETTERBERG, Peter, 433 31 PARTILLE (SE); BJÖRKLUND, Magnus, 423 49 TORSLANDA (SE); CARLSSON, Andreas, 436 39 ASKIM (SE); ROSENBERG, Johan, 443 32 LERUM (SE); ÖSTH, Jonas, 417 62 GÖTEBORG (SE); ADOLFSSON, Peter, 417 24 GÖTEBORG (SE)
(74) Representative: Kransell & Wennborg KB

(57) **Abstract**

A vehicle seat system (100), comprising: an articulated backrest (102) having an articulation point (104) dividing the backrest into an upper portion (106) and a lower portion (108); a headrest (110) arranged at the upper portion of the backrest; one or more sensors (204, 206) configured to acquire data indicative of a distance (112) between a head (114) of an occupant and the headrest; and processing circuitry (202) configured to acquire data indicative of a hazardous vehicle condition from vehicle sensors; the processing circuitry being further configured to, in response to detection of a hazardous vehicle condition, activate articulation of the upper portion of the backrest about the articulation point to reduce a distance between the headrest and the head of the occupant.

## Description

### TECHNICAL FIELD

The present disclosure relates to an articulated vehicle seat system and to a method for controlling the seat system. In particular, the disclosure relates to an active safety system for an articulated backrest.

### BACKGROUND

Vehicle seating systems play a critical role in occupant comfort, ergonomics, and safety. Modern seat designs accommodate a wide range of occupant sizes, postures, and seating preferences, often incorporating adjustable features such as lumbar support, seat height, recline angle, and headrest position. These adjustments are typically intended to enhance comfort during normal driving conditions and allow for personalization to the driver's or passenger's needs.

**In** parallel, advanced vehicle safety systems have evolved to include dynamic components aimed at mitigating injury during collisions. Sensors within the vehicle monitor various parameters, including acceleration, deceleration, and proximity to other vehicles or obstacles. Information from these sensors may be used to inform or trigger safety functions such as seatbelt pretensioning, airbag deployment, or adjustments in restraint systems. The integration of occupant sensing technologies with vehicle safety systems has enabled more responsive and adaptive protection strategies.

### SUMMARY

**In** general, the disclosed subject matter relates to an active safety system for an articulated backrest.

According to a first aspect of the invention, it is provided a vehicle seat system, comprising: an articulated backrest having an articulation point dividing the backrest into an upper portion and a lower portion; a headrest arranged at the upper portion of the backrest; one or more sensors configured to acquire data indicative of a distance between a head of an occupant and the headrest; and processing circuitry configured to acquire data indicative of a hazardous vehicle condition from vehicle sensors; the processing circuitry being further configured to, in response to detection of a hazardous vehicle condition, activate articulation of the upper portion of the backrest about the articulation point to reduce a distance between the headrest and the head of the occupant.

Due to the diversity in body dimensions of a vehicle occupant, seating preferences, and posture, the spatial relationship between an occupant's head and the headrest can vary significantly. In the event of a vehicle collision, especially from the rear, this variation can result in suboptimal support of the head and neck, increasing the risk of cervical spine injuries such as whiplash. Existing seating systems may lack the ability to dynamically adapt this spatial relationship during the collision event.

The described system for a vehicle seat includes an articulated backrest with an articulation point dividing the backrest into an upper and a lower portion. A headrest is arranged at the upper portion of the backrest. The system further comprises one or more sensors configured to acquire data indicative of the distance between the head of an occupant and the headrest, and processing circuitry configured to detect a hazardous vehicle condition using vehicle sensor data. Upon detection of such a condition, the processing circuitry activates articulation of the upper portion of the backrest about the articulation point in order to reduce the distance between the headrest and the head of the occupant.

By actively adjusting the geometry of the seatback in response to a hazardous condition, the system enhances the positioning of the headrest relative to the occupant's head at the critical moment of impact. This improved alignment contributes to more effective energy absorption and load distribution to the head and neck, thereby significantly lowering the risk of whiplash and similar injuries. The solution accommodates variations in occupant posture and headrest position in real time, offering enhanced protection across a broad range of occupant profiles and seating configurations.

The processing circuitry referred to herein may include, or be operatively connected to, one or more sensor interfaces configured to receive data from sensors integrated into the vehicle. These sensors may include occupant position sensors, such as cameras or radar units, and vehicle condition sensors, such as accelerometers or proximity detectors. The operative connection between the processing circuitry and the sensors ensures that real-time data acquisition and signal processing are enabled for accurate determination of occupant head position, headrest position, and vehicle dynamics. This integration allows the system to execute the articulated backrest adjustment logic responsively based on current conditions.

According to an example, the hazardous vehicle condition is classified into one of a plurality of categories, including an increased risk of collision, an imminent collision, and a collision. This classification enables the system to distinguish between proactive (pre-crash) and reactive (on-crash) scenarios. For example, data from radar, camera, or predictive collision algorithms may indicate an increased risk of impact, while accelerometers or crash sensors may confirm an actual collision. The classification provides a basis for dynamically adjusting safety response intensity and timing, improving adaptability to varied crash contexts.

According to an example, a speed of articulation of the upper portion of the backrest is adjusted based on the classification of the hazardous vehicle condition. By varying articulation speed depending on the severity or imminence of the threat, the system balances the need for rapid protective repositioning with the need for smooth, controlled adjustment in lower-risk situations. This contributes to both effective safety performance and occupant comfort.

According to an example, the speed of articulation is set to a first speed when the hazardous vehicle condition is classified as an increased risk of collision, and to a second speed, higher than the first speed, when the hazardous vehicle condition is classified as a collision. This allows for a tiered actuation strategy, where moderate articulation speed is used to preposition the headrest in anticipation of a possible collision, and a higher speed is used when a collision is confirmed, ensuring timely repositioning of the headrest to enhance occupant protection at impact.

According to an example, articulation of the upper portion of the backrest is performed by a brushless electric motor. Brushless electric motors enable precise and rapid articulation, supporting controlled movement suitable for non-critical or lower-severity events.

According to an example, articulation of the upper portion of the backrest is performed by an explosive actuator or a gas-powered device, enabling high-speed, high-force articulation suitable for collision events requiring immediate intervention. Although the described devices are typically one-time use and may need replacement in a workshop, they provide critical timing advantages for reactive crash scenarios. Moreover, the use of an explosive device facilitates use of communication channels used for communication with airbag systems in the vehicle.

According to an example, a type of actuator used for articulation of the upper portion of the backrest is selected based on the classification of the hazardous vehicle condition. This approach ensures that actuator selection is optimized for the detected threat level, favoring reversible, low-energy solutions in lower-risk cases and deploying high-speed mechanisms only when necessary, thereby improving crash response effectiveness.

According to an example, the processing circuitry is configured to select the explosive actuator or gas-powered device when the hazardous vehicle condition is classified as a collision; and to select the brushless electric motor when the hazardous vehicle condition is classified as an increased risk of collision. By linking actuator selection directly to hazard classification, irreversible, high-speed solutions are only actuated in confirmed impact scenarios, while reversible and/or serviceable solutions are used in predictive or lower-severity cases. As noted above, it would also be possible to only use a brushless electric motor for actuation in the event of a collision.

According to an example, the processing circuitry is configured to adjust a speed of articulation of the upper portion of the backrest based on the distance between the head of the occupant and the headrest; wherein the speed is set to a first speed when the distance is below a predefined threshold, and to a second speed, higher than the first speed, when the distance is equal to or above the predefined threshold. This allows the articulation speed to be tailored to the actual occupant configuration: a shorter gap requires less movement and permits slower actuation, while a longer gap requires faster articulation to achieve protective alignment before impact.

According to an example, the distance between the head of the occupant and the headrest is determined from spatial data acquired from one or more interior vehicle sensors, including a camera or a radar sensor, and from positional data of the headrest acquired from seat adjustment settings. This approach allows indirect and accurate determination of occupant-to-headrest distance using existing in-cabin sensing infrastructure. For example, a radar unit or overhead camera may detect head location, while seat memory systems report headrest position. This multi-source data fusion supports real-time and individualized safety responses.

According to an example, the processing circuitry is configured to coordinate articulation of the upper portion of the backrest with activation of a seatbelt tensioning system so as to maintain the position of the head of the occupant relative to the headrest. Coordination with the seatbelt system ensures that articulation does not cause relative displacement of the occupant's upper body, particularly the head, and also reduces the risk that the position of the head changes during articulation. This is important in dynamic situations such as roll-over scenarios, where synchronized movement preserves protective geometry and restraint effectiveness.

According to an example, the processing circuitry is further configured to reverse the articulation of the upper portion of the backrest if the hazardous vehicle condition did not result in a collision. This capability enhances user experience and system efficiency by restoring the seatback to its original configuration when no impact has occurred. Reversibility is particularly relevant when using a brushless electric motor as the actuator and contributes to reduced service requirements.

According to an example, the processing circuitry is configured to provide a notification to a driver in response to data indicative of a hazardous vehicle condition; wherein the notification indicates that a hazardous vehicle condition was detected. A driver notification provides transparency into safety system operation, especially in cases where no collision occurred. This helps manage occupant expectations, informs service technicians, and can be used for system diagnostics or user education.

According to a second aspect, there is provided a computer-implemented method, comprising: acquiring, by processing circuitry of a computer system, data indicative of a distance between a head of an occupant and a headrest arranged at an upper portion of an articulated backrest, the backrest having an articulation point dividing it into an upper portion and a lower portion; acquiring, by the processing circuitry, data indicative of a hazardous vehicle condition from one or more vehicle sensors; and activating, by the processing circuitry in response to detection of the hazardous vehicle condition, articulation of the upper portion of the backrest about the articulation point so as to reduce the distance between the headrest and the head of the occupant.

There is also provided a computer program product comprising program code for performing, when executed by the processing circuitry, the method, and a non-transitory computer-readable storage medium comprising instructions, which when executed by the processing circuitry, cause the processing circuitry to perform the method.

Effects and features of this second aspect are largely analogous to those described above in connection with the first aspect of the disclosure.

### BRIEF DESCRIPTION OF THE DRAWINGS

These and other aspects of the present invention will now be described in more detail, with reference to the appended drawings showing examples, wherein:
Fig. 1 schematically illustrates a vehicle seat system according to an example.
Fig. 2 is a system diagram including components of the vehicle seat system.
Fig. 3 is a flow chart describing steps of a method according to an example embodiment.
Figs. 4A-B schematically illustrate articulation of a seat according to an example embodiment.
Fig. 5 is a schematic diagram of a computer system for implementing examples disclosed herein.

### DETAILED DESCRIPTION

The present vehicle seat system will now be described more fully hereinafter with reference to the accompanying drawings, in which embodiments and examples are shown. This seat system may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

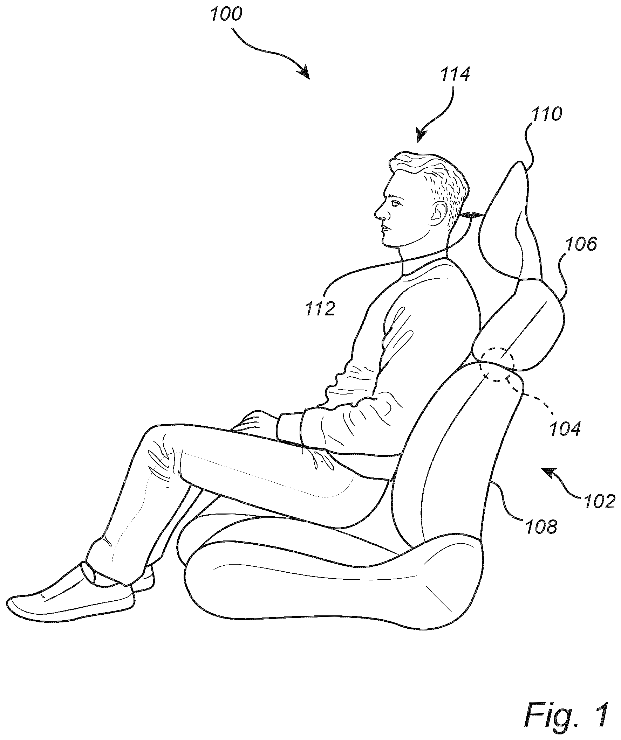

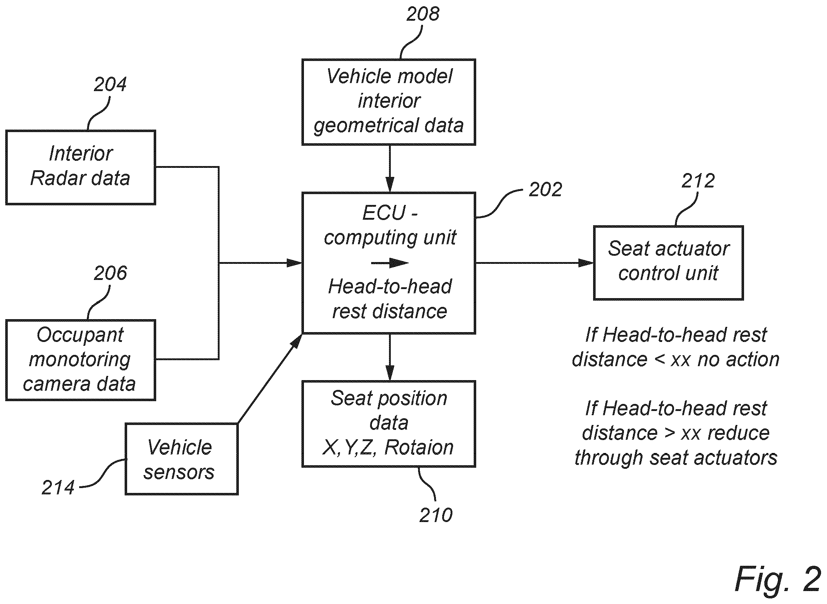

Fig. 1 schematically illustrates a vehicle seat system 100 comprising an articulated backrest 102, and Fig. 2 is a system diagram including components of the vehicle seat system, 100. The articulated backrest 102 includes an articulation point 104, which divides the backrest 102 into a lower portion 108 and an upper portion 106. The articulation point 104 may be located approximately at shoulder height or slightly below, allowing independent movement of the upper portion 106 relative to the lower portion 108. In particular, the articulation point may be located at 50% to 95% of the height of the backrest 102, more particularly at 65% to 80% of the height of the backrest 102, to be suitable for a majority of vehicle occupants. This configuration enables targeted adjustment of the headrest area without altering the lumbar or pelvic support zones of the seat.

A headrest 110 is arranged at the upper portion 106 of the backrest 102. The system 100 includes one or more sensors 204, 206, 208, 210 configured to acquire data indicative of a distance 112 between a head 114 of an occupant and the headrest to determine the spatial relationship between the headrest 110 and the head 114 of the occupant.

As illustrated in the system diagram of Fig. 2, the vehicle seat system 100 further comprises processing circuitry 202, which is configured to acquire data indicative of a hazardous vehicle condition. This may include input from vehicle sensors 214 such as accelerometers, radar, lidar, or external cameras. The hazardous vehicle condition may be classified into categories such as increased risk of collision, imminent collision, or confirmed collision, allowing the system to tailor its response accordingly. For example, the processing circuitry 202 may evaluate a high closing speed or a sudden deceleration event as indicative of a collision.

In response to detection of a hazardous vehicle condition, the processing circuitry 202 is further configured to activate articulation of the upper portion 106 of the backrest 102 about the articulation point 104. This articulation serves to reduce the distance 112 between the headrest 110 and the occupant's head 114, thereby positioning the headrest 110 in closer proximity to the occupant at the moment of impact. This reduction in distance supports appropriate engagement of the headrest 110 with the occupant's head 114 and mitigates excessive relative motion of the cervical spine, thereby reducing the likelihood of whiplash or similar injuries. The describes system may also be coordinated with vehicle airbag systems.

The sensors 204, 206 may include, for example, a camera sensor 204 positioned within the vehicle cabin, a radar unit 206 embedded within the headrest 110, a seat position sensor 208 integrated into the seat structure. The distance 112 may further be estimated based on interior geometrical data 208 and seat positioning data 210 describing the orientation of the backrest 102 and headrest 110 in the space of the vehicle interior. The sensors may be used individually or in combination to determine the position of the occupant's head 114 and the location of the headrest 110 in space, thereby enabling calculation of the distance 112. In some implementations, the distance 112 may be estimated based on known headrest position from seat positioning data 210 and detected head position from in-cabin sensing.

According to an example, the hazardous vehicle condition may be classified into one of a plurality of categories, including an increased risk of collision, an imminent collision, and a collision. The classification supports differentiated system responses based on the nature and severity of the event. Classification may be performed by processing circuitry 202 based on input from vehicle sensors 214, including data from Advanced Driver Assistance Systems (ADAS), Vehicle-to-Vehicle (V2V) communication systems, and the Supplemental Restraint System (SRS).

The classification process may utilize multiple sensor modalities. For example, an *increased risk of collision* may be determined through predictive evaluation of the driving environment using ADAS inputs such as lane departure signals, close vehicle proximity, or frequent and rapid cue appearances in the visual or radar field. Such a condition may be identified several seconds before any potential impact.

An *imminent collision* classification may be generated based on rearward-facing radar or forward-looking ADAS sensors detecting a fast-approaching vehicle or obstacle, in scenarios where it is unlikely that braking or avoidance will occur in time. This level of classification allow for high-alert protective responses without full SRS deployment.

A *collision* condition is primarily classified based on direct crash detection by the SRS. This includes inputs such as crash pulses, high accelerative forces, or confirmed contact events. In some cases, processing circuitry 202 may predict a collision shortly before impact by interpreting extreme deceleration values or urgent environmental cues from ADAS, allowing earlier intervention.

Classification of hazardous vehicle conditions enables the system 100 to adopt a proactive or reactive approach. Proactive responses are initiated prior to impact, aiming to preposition safety components. Reactive responses occur at or immediately after impact, typically coordinated with SRS deployment. The processing circuitry 202 may also be configured to coordinate actuation of the articulated backrest 102 with seatbelt tensioning systems to maintain occupant posture and optimize the alignment between the headrest 110 and the head 114 during the dynamic phase of the crash event.

Triggering of the system may occur through various pathways, depending on the classification level. In the case of proactive activation, ADAS inputs such as rear-end radar data or road departure detection signals may initiate system action. For example, a road departure event detected by the ADAS may be forwarded to the SRS and also serve to activate articulation. In contrast, reactive activation is typically driven by SRS inputs confirming that a crash has occurred.

The vehicle seat system 100 may be configured to adjust the speed at which the upper portion 106 of the backrest 102 articulates, based on the classification of the hazardous vehicle condition. This enables the system to adapt its response to the urgency of the detected event, ensuring rapid action when needed while avoiding unnecessary or abrupt movement in less critical situations.

Specifically, a first articulation speed may be used when the condition is classified as an increased risk of collision, allowing for smoother and more controlled adjustment. A second, higher articulation speed may be applied when the condition is classified as a confirmed collision, where immediate repositioning is necessary to provide protective alignment between the headrest 110 and the occupant's head 114. This dynamic speed control improves occupant protection in severe cases while preserving comfort and mechanical longevity during lower-risk events.

Articulation of the upper portion 106 of the backrest 102 may be carried out by an actuator comprising a brushless electric motor. This type of actuator enables precise control and reversibility, making it suitable for both pre-crash and post-crash scenarios. Due to its responsiveness and controllability, the brushless electric motor may serve as the primary actuation mechanism, including in confirmed collision conditions where its torque and speed capabilities meet the system's protection requirements.

In some configurations, articulation may also be performed by an explosive actuator or a gas-powered actuator offering fast actuation which may be particularly useful in high-severity collision events where timing is critical. While not reversible, such devices can be designed for one-time use and can be replaced during routine service or workshop maintenance, thereby serving as optional high-speed alternatives or supplements to a main motorized system.

The system may further be equipped with control logic within the processing circuitry 202 that selects the appropriate actuator type based on the classification of the hazardous vehicle condition. For example, the brushless electric motor may be used under moderate threat conditions such as increased collision risk, while the explosive or gas-powered actuator may be triggered when a collision is confirmed. This actuator selection strategy enables scalable responses, allowing the system to deploy the most suitable mechanism for a given situation.

The processing circuitry 202 may also adjust articulation speed based on the distance 112 between the occupant's head 114 and the headrest 110. When this distance 112 is below a predefined threshold, a first, lower articulation speed may be used; when the distance 112 equals or exceeds the threshold, a second, higher speed may be applied. This ensures timely repositioning of the headrest 110 in cases where the gap is large while avoiding overcorrection when the head 114 is already near the headrest 110.

To determine the distance 112 between the head 114 and the headrest 110, the system 100 may use spatial data from one or more interior vehicle sensors, including a cabin-facing camera 204 or a radar sensor 206. Additionally, seat position sensor data 208 and seat adjustment data 210 may provide the relative location of the headrest 110. In indirect measurement approaches, the system may estimate the position of the back of the head 114 based on the detected position of the front of the head using camera 204 or radar 206, and apply a known anatomical offset to estimate the distance 112 to the headrest 110. Cameras 204 are a preferred sensing modality due to their existing integration in vehicle interiors, though radar 206 embedded in or near the headrest 110 may be employed in combination or as an alternative.

The processing circuitry 202 may be further configured to coordinate articulation of the upper portion 106 of the backrest 102 with activation of a seatbelt tensioning system 216. This coordination helps maintain the relative position between the occupant's head 114 and the headrest 110 during rapid vehicle dynamics, such as those occurring in a rollover. Synchronization between the seatbelt tensioning 216 and backrest articulation increases the likelihood that the head 114 remains in the optimal alignment with the headrest 110 throughout the event.

To address false positives or non-impact scenarios, the system 100 may reverse the articulation of the upper portion 106 if it is determined that the hazardous condition did not result in a collision. This reversal may be time-limited or conditional on confirmation by additional sensor inputs, such as the absence of a crash pulse from SRS sensors 214. This functionality preserves occupant comfort and system readiness while avoiding unnecessary seat configuration changes.

Moreover, after activation of the articulation function, the system 100 may notify the driver that a hazardous vehicle condition was detected. This notification may be generated by the processing circuitry 202 and presented via an HMI interface 218. The notification may alsobe provided in response to data indicative of a hazardous vehicle condition to potentially alert the driver before articulation. It enhances driver awareness and may assist with post-event diagnostics or maintenance, particularly when no actual collision occurred.

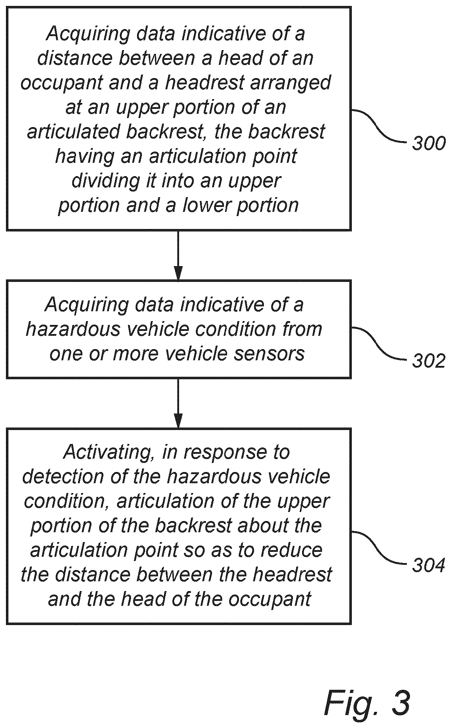

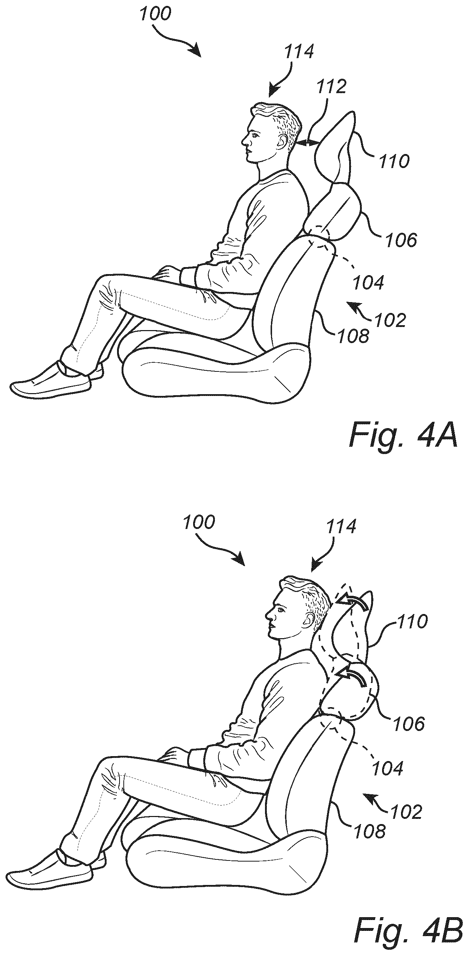

Fig. 3 is a flow chart outlining steps of a computer-implemented method of controlling a vehicle seat system 100, according to an example, and Figs. 4A-B schematically illustrate headrest articulation. The method is executed by processing circuitry 202 and includes steps for adaptively adjusting the position of an articulated seatback 102 in response to detected vehicle conditions.

First, the method comprises acquiring 300, by the processing circuitry 202, data indicative of a distance 112 between a head 114 of an occupant and a headrest 110 arranged at an upper portion 106 of the backrest 102. The backrest 102 includes an articulation point 104 dividing it into an upper portion 106 and a lower portion 108. The distance 112 may be determined using spatial data obtained from one or more sensors, including a cabin-facing camera 204 or a radar sensor 206, in combination with seat adjustment data 210 describing the position of the headrest 110.

The processing circuitry 202 further acquires 302 data indicative of a hazardous vehicle condition. This data may originate from vehicle sensors 214 such as radar, lidar, accelerometers, or external cameras, and may include predictive inputs from ADAS or direct impact signals from the SRS. The acquired data is used to classify the hazardous condition, for example as an increased risk of collision, imminent collision, or confirmed collision.

Next, based on the classification of the hazardous vehicle condition, the processing circuitry 202 activates 304 articulation of the upper portion 106 of the backrest 102 about the articulation point 104. This actuation serves to reduce the distance 112 between the headrest 110 and the occupant's head 114 in preparation for, or in response to, a crash event.

Fig. 4A and 4B illustrate the seat configuration before and after articulation, respectively. In Fig. 4A, the seat is shown in a pre-actuation state where the upper portion 106 of the backrest 102 is in its nominal position. The distance 112 between the occupant's head 114 and the headrest 110 may be larger than ideal for impact mitigation. In Fig. 4B, the seat is shown after activation of articulation. The upper portion 106 has been rotated about the articulation point 104, repositioning the headrest 110 closer to the head 114. This adjustment provides more effective engagement between the head and the headrest during a collision, reducing the risk of whiplash and similar injuries.

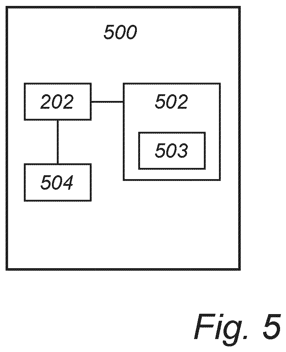

Fig. 5 illustrates a computer system 500 according to an embodiment. The steps of a method performed by the computer system 500 are in practice performed by processing circuitry 202 embodied in the form of one or more microprocessors arranged to execute a computer program 502 downloaded to a non-transitory computer readable storage medium 503 associated with the microprocessor, such as a Random Access Memory (RAM), a Flash memory or a hard disk drive. The processing circuitry 202 is arranged to cause the computer system 500 to carry out the method according to embodiments when the appropriate computer program 502 comprising computer-executable instructions is downloaded to the storage medium 503 and executed by the processing circuitry 202. The storage medium 503 may also be a computer program product comprising the computer program 502. Alternatively, the computer program 502 may be transferred to the storage medium 503 by means of a suitable computer program product, such as a Digital Versatile Disc (DVD) or a memory stick. As a further alternative, the computer program 502 may be downloaded to the storage medium 503 over a network. The processing circuitry 202 may alternatively be embodied in the form of a digital signal processor (DSP), an application specific integrated circuit (ASIC), a field-programmable gate array (FPGA), a complex programmable logic device (CPLD), etc. The computer system 500 further comprises a communication interface 504 (wired or wireless) over which it is configured to transmit and receive data.

Example 1. A vehicle seat system (100), comprising: an articulated backrest (102) having an articulation point (104) dividing the backrest into an upper portion (106) and a lower portion (108); a headrest (110) arranged at the upper portion of the backrest; one or more sensors (204, 206) configured to acquire data indicative of a distance (112) between a head (114) of an occupant and the headrest; and processing circuitry (202) configured to acquire data indicative of a hazardous vehicle condition from vehicle sensors; the processing circuitry being further configured to, in response to detection of a hazardous vehicle condition, activate articulation of the upper portion of the backrest about the articulation point to reduce a distance between the headrest and the head of the occupant.

Example 2. The system according to claim 1, wherein the hazardous vehicle condition is classified into one of a plurality of categories, including an increased risk of collision, an imminent collision, and a collision.

Example 3. The system of claim 2, wherein a speed of articulation of the upper portion of the backrest is adjusted based on the classification of the hazardous vehicle condition.

Example 4. The system according to claim 3, wherein the speed of articulation is set to a first speed when the hazardous vehicle condition is classified as an increased risk of collision, and to a second speed, higher than the first speed, when the hazardous vehicle condition is classified as a collision.

Example 5. The system according to any one of the preceding claims, wherein articulation of the upper portion of the backrest is performed by an actuator comprising a brushless electric motor.

Example 6. The system according to any one of the preceding claims, wherein articulation of the upper portion of the backrest is performed by an explosive actuator or a gas-powered actuator.

Example 7. The system according to claim 5 or 6, wherein a type of actuator used for articulation of the upper portion of the backrest is selected based on the classification of the hazardous vehicle condition.

Example 8. The system according to claim 7, wherein the processing circuitry is configured to select the explosive actuator or gas-powered device when the hazardous vehicle condition is classified as a collision; and to select the brushless electric motor when the hazardous vehicle condition is classified as an increased risk of collision.

Example 9. The system according to any one of the preceding claims, wherein the processing circuitry is configured to adjust a speed of articulation of the upper portion of the backrest based on the distance between the head of the occupant and the headrest; wherein the speed is set to a first speed when the distance is below a predefined threshold, and to a second speed, higher than the first speed, when the distance is equal to or above the predefined threshold.

Example 10. The system according to any one of the preceding claims, wherein the distance between the head of the occupant and the headrest is determined from spatial data acquired from one or more interior vehicle sensors, including a camera or a radar sensor, and from positional data of the headrest acquired from seat adjustment settings.

Example 11. The system according to any one of the preceding claims, wherein the processing circuitry is configured to coordinate articulation of the upper portion of the backrest with activation of a seatbelt tensioning system so as to maintain the position of the head of the occupant relative to the headrest.

Example 12. The system according to any one of the preceding claims, wherein the processing circuitry is further configured to reverse the articulation of the upper portion of the backrest if the hazardous vehicle condition did not result in a collision.

Example 13. The system according to any one of the preceding claims, wherein the processing circuitry is configured to provide a notification to a driver following activation of the articulation; wherein the notification indicates that a hazardous vehicle condition was detected.

Example 14. A computer-implemented method of controlling a vehicle seat system (100), comprising: acquiring (300), by processing circuitry (202) of a computer system, data indicative of a distance (112) between a head (114) of an occupant and a headrest (110) arranged at an upper portion (106) of an articulated backrest (102), the backrest having an articulation point (104) dividing it into an upper portion (106) and a lower portion (108); acquiring (302), by the processing circuitry, data indicative of a hazardous vehicle condition from one or more vehicle sensors (214); and activating (304), by the processing circuitry in response to detection of the hazardous vehicle condition, articulation of the upper portion of the backrest about the articulation point so as to reduce the distance between the headrest and the head of the occupant.

Example 15. A computer program product comprising program code for performing, when executed by the processing circuitry, the method according to claim 14.

Various examples have been described. These and other examples are within the scope of the following claims.

## Claims

1. A vehicle seat system (100), comprising:
an articulated backrest (102) having an articulation point (104) dividing the backrest into an upper portion (106) and a lower portion (108);
a headrest (110) arranged at the upper portion of the backrest;
one or more sensors (204, 206) configured to acquire data indicative of a distance (112) between a head (114) of an occupant and the headrest; and
processing circuitry (202) configured to acquire data indicative of a hazardous vehicle condition from vehicle sensors;
the processing circuitry being further configured to, in response to detection of a hazardous vehicle condition, activate articulation of the upper portion of the backrest about the articulation point to reduce a distance between the headrest and the head of the occupant.

2. The system according to claim 1, wherein the hazardous vehicle condition is classified into one of a plurality of categories, including an increased risk of collision, an imminent collision, and a collision.

3. The system of claim 2, wherein a speed of articulation of the upper portion of the backrest is adjusted based on the classification of the hazardous vehicle condition.

4. The system according to claim 3, wherein the speed of articulation is set to a first speed when the hazardous vehicle condition is classified as an increased risk of collision, and to a second speed, higher than the first speed, when the hazardous vehicle condition is classified as a collision.

5. The system according to any one of the preceding claims, wherein articulation of the upper portion of the backrest is performed by an actuator comprising a brushless electric motor.

6. The system according to any one of the preceding claims, wherein articulation of the upper portion of the backrest is performed by an explosive actuator or a gas-powered actuator.

7. The system according to claim 5 or 6, wherein a type of actuator used for articulation of the upper portion of the backrest is selected based on the classification of the hazardous vehicle condition.

8. The system according to claim 7, wherein the processing circuitry is configured to select the explosive actuator or gas-powered device when the hazardous vehicle condition is classified as a collision; and to select the brushless electric motor when the hazardous vehicle condition is classified as an increased risk of collision.

9. The system according to any one of the preceding claims, wherein the processing circuitry is configured to adjust a speed of articulation of the upper portion of the backrest based on the distance between the head of the occupant and the headrest; wherein the speed is set to a first speed when the distance is below a predefined threshold, and to a second speed, higher than the first speed, when the distance is equal to or above the predefined threshold.

10. The system according to any one of the preceding claims, wherein the distance between the head of the occupant and the headrest is determined from spatial data acquired from one or more interior vehicle sensors, including a camera or a radar sensor, and from positional data of the headrest acquired from seat adjustment settings.

11. The system according to any one of the preceding claims, wherein the processing circuitry is configured to coordinate articulation of the upper portion of the backrest with activation of a seatbelt tensioning system so as to maintain the position of the head of the occupant relative to the headrest.

12. The system according to any one of the preceding claims, wherein the processing circuitry is further configured to reverse the articulation of the upper portion of the backrest if the hazardous vehicle condition did not result in a collision.

13. The system according to any one of the preceding claims, wherein the processing circuitry is configured to provide a notification to a driver in response to data indicative of a hazardous vehicle condition; wherein the notification indicates that a hazardous vehicle condition was detected.

14. A computer-implemented method of controlling a vehicle seat system (100), comprising:
acquiring (300), by processing circuitry (202) of a computer system, data indicative of a distance (112) between a head (114) of an occupant and a headrest (110) arranged at an upper portion (106) of an articulated backrest (102), the backrest having an articulation point (104) dividing it into an upper portion (106) and a lower portion (108);
acquiring (302), by the processing circuitry, data indicative of a hazardous vehicle condition from one or more vehicle sensors (214); and
activating (304), by the processing circuitry in response to detection of the hazardous vehicle condition, articulation of the upper portion of the backrest about the articulation point so as to reduce the distance between the headrest and the head of the occupant.

15. A computer program product comprising program code for performing, when executed by the processing circuitry, the method according to claim 14.
